# EUROPEAN PATENT SPECIFICATION

(11) **EP 2 051 082 B1**
(45) Date of publication and mention of the grant of the patent: **27.11.2013**
(21) Application number: 07118640.7
(22) Date of filing: 17.10.2007
(51) Int. Cl.: G01N 35/10

(54) **System and method for producing weighed portions of powder from at least one biological material at cryotemperatures**
System und Verfahren zur Herstellung abgewogener Portionen eines Pulvers aus mindestens einem biologischen Material bei Kryotemperaturen
Système et procédé pour la production de portions pondérées de poudre à partir d'au moins un matériau biologique à basses températures

(43) Date of publication of application: 22.04.2009
(73) Proprietor: Max-Planck-Gesellschaft zur Förderung der Wissenschaften e.V., 80539 München (DE)
(72) Inventor: Stitt, Mark Prof., 14469, Potsdam (DE); Sulpice, Ronan Dr., 14469, Potsdam (DE); Gibon, Yves Dr., 14169, Berlin (DE); WHITWELL, Andrew c/o LabMan Automation Ltd., Stokesley, North Yorkshire TS9 5JZ (GB); SKILBECK, Richard c/o LabMan Automation Ltd., Stokesley, North Yorkshire TS9 5JZ (GB); PARKER, Simon c/o LabMan Automation Ltd., Stokesley, North Yorkshire TS9 5JZ (GB); ELLISON, Richard c/o LabMan Automation Ltd., Stokesley, North Yorkshire TS9 5JZ (GB)
(74) Representative: Hannke, Christian

(56) References cited:
- WO-A-03/041835
- WO-A-2004/030819
- WO-A-2006/075201
- FR-A- 2 791 428
- US-A- 5 544 683
- US-A1- 2002 134 591
- US-A1- 2003 028 914
- US-A1- 2004 019 435

## Description

The invention relates to a system and a method for producing weighed portions of powder from at least one biological material at cryotemperatures according to claim 1 and claim 13.

It is known, that biological materials, for example plant material, are ground manually in different quantities in order to obtain plant powder. This plant powder can be used to perform expression profiling, polysome profiling, enzyme profiling, phosphor-proteomics and metabolite profiling, which are needed to perform research work in this area. However, each of the preparing steps and research steps were performed manually by using manual tools for grinding the plants and for select defined portions of the obtained powder in order to perform the mentioned research tests.

There is a need to support these research steps by technical automatism, since the number of biological materials to be tested is still increasing.

Because of the characteristics of the biological material to be examined it is necessary to perform the working steps at cryotemperatures, e.g. at -60° C which results in a complicated handling of the different steps to be performed manually.

US 2003/0028914 A1 is directed to a method of multigenerational analysis of plants modified by insertional mutagenesis, and a method for associating plant and mutant trait and genotype information. An automatic processing for granting the biological material, loosening the powder, positioning an opening in a first vessel and transferring the powder to a second vessel is not shown.

Therefore it is an object of the present invention, to provide a system and a method for producing portions of a powder from at least one biological material at cryotemperatures, which enables the automatic performing of all following working steps at cryotemperature without any manual support.

This object is solved by a system according to the features of claim 1 and a method according to the features of claim 13.

According to the subject of the invention a system for producing quantified defined portions of powder from at least one biological material wherein the following working steps were conducted at cryotemperatures by automatic performing comprising
- means for grinding the biological material deposited in at least one first vessel to powder:
- means for loosening the powder resulting from grinding the biological material In the first vessel;
- means for positioning at least one first opening in the first vessel, and
- means for transferring the quantified defined portions of powder in a plurality of second vessels by using the first opening as a transfer way.

A method according to the present invention includes the following steps by automatic per-forming:
- grinding biological material deposited in at least one first vessel to the powder;
- loosening the powder resulting from grinding the biological material in the first vessel;
- positioning at least one first opening in the first vessel, and
- transferring the quantified defined portions of the powder in a plurality of second vessels by using the first opening as a transfer way.

By using such a system and applying such a method it is possible to perform automatically without any manual help the grinding step, the loosening step, the positioning step and the transferring step in other vessels, which can be used to perform the profiling work steps, on an uncomplicated and fast way which provides an high output of a plurality of portions of the powder. The biological material can be a plant or other material, which is to be ground.

By using such a method a robotised system is provided to grind plant or other tissues to a fine powder and aliquot them for example into six weighed samples in micronic tube format at temperatures of for example 0° C - 100° C, in particular - 70° C with a throughput of for example 100 samples per 24 hours. It is possible to grind plant tissues with defined genetic diversities in order to receive multilevel phenotyping as for example expression arrays, robotised qRT-PCA, enzymes analyses, methabolites analyses, and fizzyology, fluxes growth, all representing bioinformatics.

The system representing a machine holds 96 vials of pre-frozen material which is ground and fed, to weight, into individual tubes, as 1.4ml tubes.

A freezer which is used for receiving the cryotemperatures can work by using liquid nitrogen. Such liquid nitrogen pre-freeze the biological material in for example standard 20 ml scintillation vials with reusable caps. These vials are loaded into the pre-chilled machine with the target 1.4 ml tubes. Grinding times can be changed for tougher materials and the input and output data is matched with the bar codes on the target tube blocks. Ground sample can be fed to one or many target tubes as the operator requires. Grinding a feeding variables are stored in profiles to suit different sample types and standard output configurations. Users can monitor the fed weights and system performance by means of a software during an operation.

Such a system allows biological samples, in particular plant samples, to be homogenised to a fine powder and distributed into small accurately weighed aliquots of pre-selected weight at cryotemperatures for the entire procedure to prevent chemical or biological changes in the biological material. It allows high throughput by handling the biological material being transferred into a fine powder in cryotemperatures, wherein the biological material is to be subsequently extracted and analysed on a set of different machines for various biological parameters including transcript profiles, protein profiles, metabolite profiles and enzyme activities.

The internal humidity is decreased by using compressed air, which is dried and fed into the chilled chamber to minimize frost built up. A restart facility is available if the power of the machine is interrupted during a long run.

The means for grinding the biological material deposited in the first vessel comprises an oscillating apparatus with a fixing element for fixing the first vessel in a basis element and a first oscillating motor, which oscillates the first vessel in at least one direction, preferably in z-direction, with a selectable oscillating frequency and a selectable amplitude. The fixing element comprises a recess in a basis element for inserting the first vessel wherein on a bottom of the recess is a spring element for bearing the first vessel springable.

Each first vessel contains in addition a plurality of balls, e.g. three balls of chrome material or chrome coated material for performing the grinding process during oscillation.

The oscillating motor performs a saw-like movement and allows the attachment of a stainless steel shaft. The oscillating motor is housed within a box which has a foam mould to hold the motor in place. The box is raised and lowered by an SMC cylinder. This raising and lowering action allows firstly vials to be placed into the grinder by a robot arm so that the grinder does not interfere with the robot arm placing the vial and then to bring the grinder down to the correct height for the grinding to occur.

According to a preferred embodiment the means for loosening the powder resulting from grinding the biological material in the first vessel comprises a pivotable arm, which at one end a holding element for holding the first vessel is arranged. The holding element containing the first vessel is pivotable moveable against a fixed block element in order to loosening the powder in the first vessel by shaking. Such a swing mechanism, which could be L-shaped, enables the pivot movement around a point within the freezer and is operated by a cylinder above the freezer.

According to a preferred embodiment the means for positioning at least one first opening in the first vessel comprises at least one needle which is arranged on a bottom of a further recess having inserted the first vessel, wherein the recess is arranged in a further basis element and a stamp for pressing the first vessel in the further recess against a spring force of a further spring element is arranged. This process and system component results in a fast and uncomplicated arrangement of a hole at the bottom of the vial by piercing. After the piercing step the spring element press the vial back on an upper position. It is possible to obtain a sharp point pierce. The point is made from a sharpened 2mm drill bit.

According to a preferred embodiment of the invention the means for transferring the quantified define portions of powder in a plurality of second vessels comprises a pulling transport element for transporting one of the second vessels to the opening of the first vessel by pulling it up to the lower side of the first vessel, wherein the first vessel is positioned in a powder feeder cup with an second opening at the bottom. Such a powder feeder enables the transfer of the powder from the first to the second vessel by shaking. Therefore, the powder feeder cup is connected with the second oscillating motor for oscillating the powder feeder cup containing the first vessel in order to transfer the powder through the first opening and the second opening in the second vessel.

The second vessel is connected by means of the pulling transport elements with a balance device which measures the weight of the second vessel and the included powder during the transfer step of the powder in order to obtain weight portions of powder in the different second vessels representing tubes.

The dry air bleeds from membrane air dryer. This reduces frost build up and is also bled through the vibrating motor (oscillating motor) to stop it freezing up.

The modus and/or electronic elements of the means are at least partially arranged in a part of a system housing which is separated from another part of the system housing containing cryotemperatures. This enables to avoid the unwished freezing of motor elements and electronic elements, e.g. of the balance.

All means are connected by a robot arm which transports the first vessels and the second vessels between the means among one another and/or between the means and a first and second storing place for storing the first and second vessels. Such storing places for the first vessels within the freezer could be a rack of 96 vials. The rack is located on a separate bed assembly within the freezer to ensure that the samples are at a suitable height for the robot arm. Also on this bed are for example six Micronic blocks each of them contains for example 96 1,4ml Micronic tubes. Also on this bed is a declog station for loosening the powder, the piercer cup and a balance cradle holder.

The robot arm passes into the freezer and has two fixtures (pickers) allowing it to pick and place for example 20 ml plastic scintillation vials and micronic tubes by suction within the freezer. The suction is provided by a vacuum motor for the vials and vacuum pump for the tubes. The suction is created by applying power to the devices and the suction is stopped by turning this power off. The vial picker contains an inductive sensor to detect this stainless steel vial cup allowing the robot to decide whether it has successfully picked the vial. The Micronic tube picker uses a flow sensor to determine the suction flow raise to decide whether the tube has been picked successfully.

Each scintillation vial contains a number of 8mm ball bearings, typically three of them, and the sample, as plant material, and uses a specially made stainless steel cap to seal the contents in.

Further preferred embodiments can be recognized from the enclosed subclaims.

### The drawing shows in:

- Fig. 1: A top view of the inventive system in schematic version according to one embodiment of the invention;
- Fig. 2: in a schematic view the robot which is used to handle the vessels in the inventive system;
- Fig. 3: in a schematic view the means for grinding the biological material;
- Fig. 4: a first vessel with balls in a schematic view;
- Fig. 5: in a schematic view the means for positioning the first opening at the first vessel;
- Fig. 6: the process of the means for loosening the powder in the first vessel according to the present invention;
- Fig. 7: in a schematic view the construction of the freezer, the balance and the robot according to the present invention;
- Fig. 8: in a schematic view the means for weighten the powder and the vessels and
- Fig. 9: the parts of the means for transferring the powder in a schematic view to the present invention.

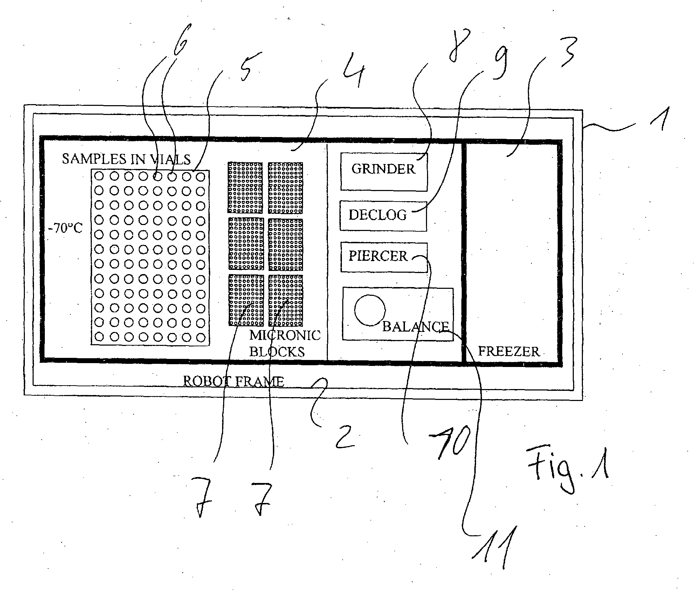

In Fig. 1 is a top view of the system according to one embodiment of present invention shown. The system has a housing 1, in which a robot frame 2 is arranged. The freezer 3 provides the cryotemperatures of -70° C in order to perform all working steps at low temperatures.

In a part 4 of the housing 1 first and second storing places 5, 7 which are arranged include the first vessels 6 representing vials and the second vessels representing tubes.

The different stations for grinding, loosening (declog) and positioning an opening (piercer) as well as for transferring the powder including a balance 45 are arranged side by side.

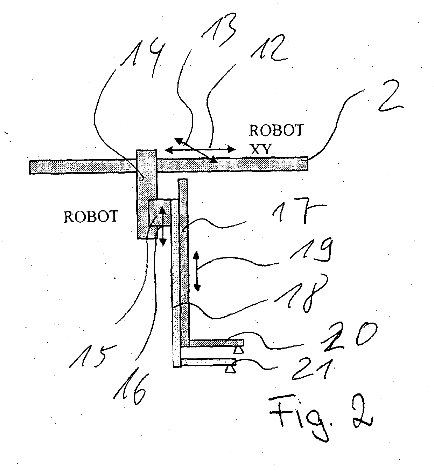

The robot as shown in Fig. 2 is slideable bearded on a sliding element 2 and can be moved in x- and y-direction 12, 13. The additional part 14 comprises another part 15, which can be moved according to the direction as shown by the reference sign 16.

By moving the part 15 the different arms 17, 18 were moved also, which is shown by the reference sign 19.

Each arm 17, 18 includes a part 20, 21 of the L-shaped form in order to handle the first and second vessels by a different part 20, 21 respectively different arms 17, 18.

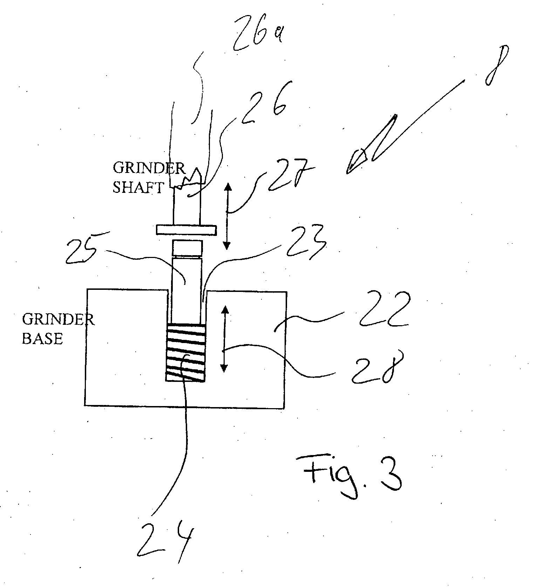

In Fig. 3 is shown in a schematic view the means for grinding the biological material, which is for example plant material, in order to obtain powder.

A basis element 22 includes a first recess 23 with a springelement 24 at the bottom, in which a first vessel 25, which is a scintillation vial, can be inserted.

The basis element could be an aluminium machined cup containing the spring, which is a stainless steel spring. When an oscillating motor 26 is started, the stamp 26 moves the vial in a vertical motion up and down with the compression against an extension of the spring element 24 such that the content of the vial is vigorously shaken. This is shown by reference signs 27, 28.

This action at the temperatures within the cryogenic freezer cause the ball bearing to collide with the frozen sample breaking the sample down into a fine powder. The power is applied to the oscillating motor 26 via a solid state relay for a fixed time period, which could be typically between 30 - 60 seconds for a good grind. Once a grinding period has elapsed the means for grinding is raised and the vial is picked from the grinder cup 22 by the robot arm.

The oscillating frequency is about 40 Hz at a stroke of for example 27 mm. The ball bearings break the plant sample within the vial during the grind process. A metal cup has been employed to avoid a cup shattering.

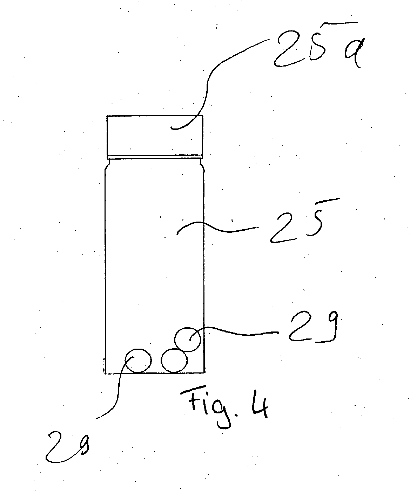

In Figure 4 is shown the first vessel representing a scintillation vial 25 with a cap 25a and the balls 29 which could have a diameter of for example 8mm.

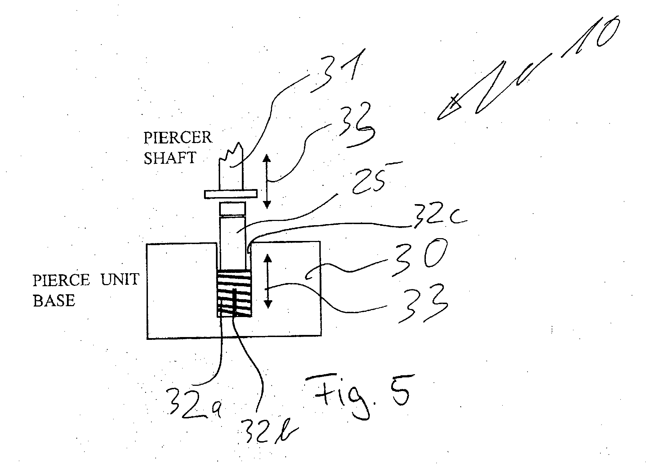

In Figure 5 is shown in a schematic view the means for positioning a first opening at the bottom of the vial 25.

The robot moves the vial 25 to the station for positioning the opening/hole and places the vial into a basis element 30, which could be a piercer cup located on the robot bed. The piercer cub 30 consists of a cub containing a small stiff spring element 32a and a needle 32b at the bottom crafted from a 2mm drill bit and sharpened to a point.

A force is applied to the vial in the piercer cup 30 by a cylinder 31 mounted above the freezer. This force compresses the spring element 32a forcing the needle 32b point through the bottom of the vial. When the force is removed and the cylinder returned back to its original position the stiff spring element 32a pushes the vial 25 back off the sharpened point of the needle 32b. The robot then picks the vial 25 from the cup using the suctions. The movement is shown by the reference signs 33. The recess is shown by reference sign 32c.

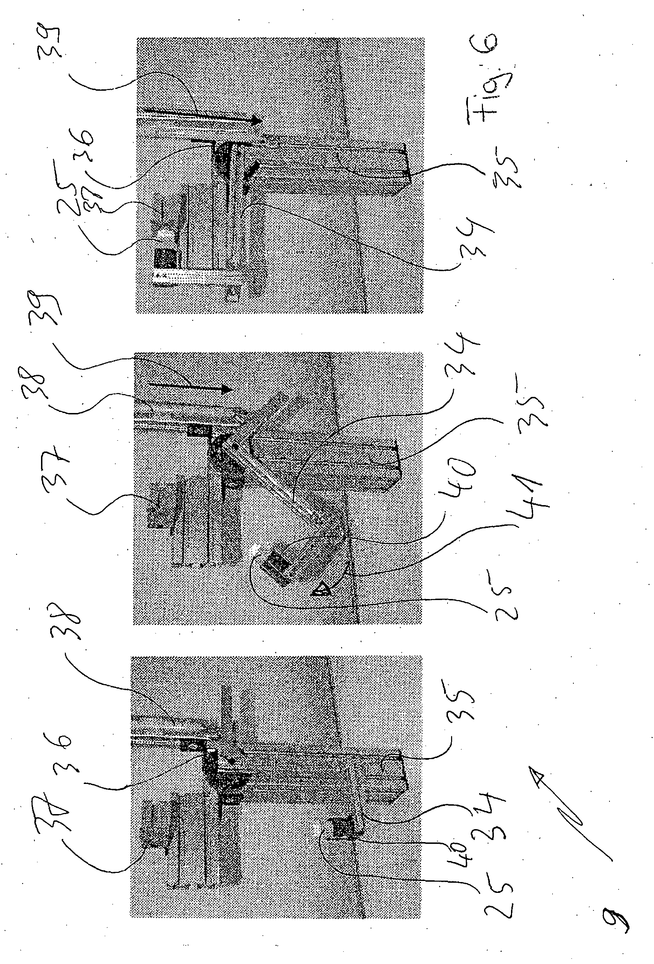

In Figure 6 is shown the process of the means for loosening the powder in the first vessel/vial 25 in three different steps. The vial 25 is positioned in a cup holder 40 mounted to the end 34 of an L-shaped swing mechanism. This mechanism pivots around a point 36 as it is shown by the reference signs 41.

The pivot movement is within the freezer and is operated by a cylinder 38 above the freezer.

When actuated the mechanism arises the vial 25, swinging it through an arc to almost horizontal and courses the vial 25 to collide with bean 37 which is fixed at the main feed element 35. The movement of the cylinder is shown by the reference sign 39.

This collision action is used to loosing the powder inside the vial 25 both after a grinding and during vipro-feeding. Both these actions have been found to compact the powder which causes it to feed poorly. This process counter acts the compacting of the powder. The loosening step is completed after typical five actuations of the mechanism. The vial 25 is picked from the cup 40 by the robot arm using the suction method as already described.

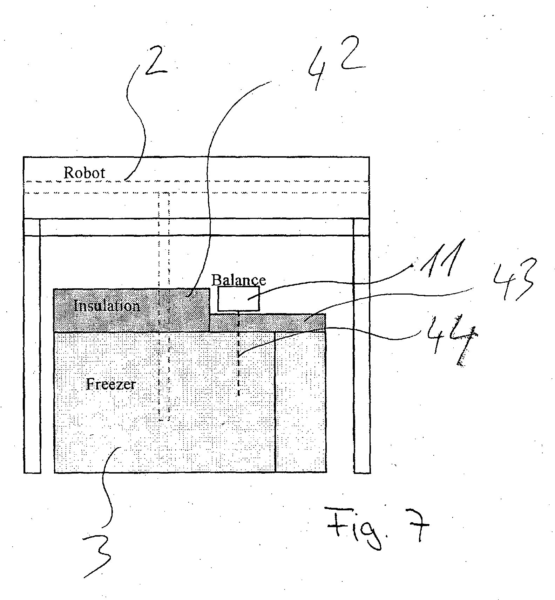

In Figure 7 is shown in a schematic view the balance as well as parts of the freezer and the insulation material and the robot. The freezer 3 can produce temperatures to -85° C. To maintain the temperature of the freezer the walls are extended upward with the 80mm thick foamed insulation panels. The balance is housed in an ambient temperature area above the freezer and can be raised and lowered on its one axis.

Access to the freezer 3 for maintenance purposes is available through panels at the front and rear.

The work bed within the freezer will try to move during the repeated cooling cycles of the system. It is mounted in the freezer with adjustable feet on all sides so it is always positioned correctly. A corner cut out will allow access to remove any water after a prolonged period of use. The bed will be raised on strips to allow the water to circulate.

The freezer attempts to maintain the temperature as set on the control panel. This temperature is set at - 75°C, preferably the freezer is set at -66°C.

The balance 11 is separated from the freezer 3 by an isolation material 43 and comprises further elements which are connected to the balance in the freezer area which is shown by a reference sign 44.

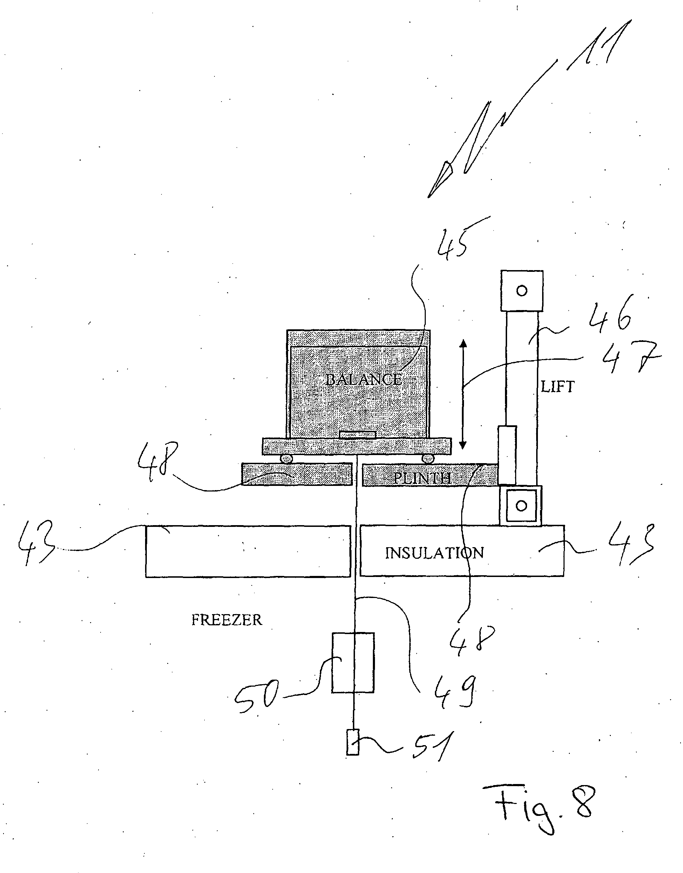

In Figure 8 is shown the means for transferring and weight the powder from the first vessel to the second vessel.

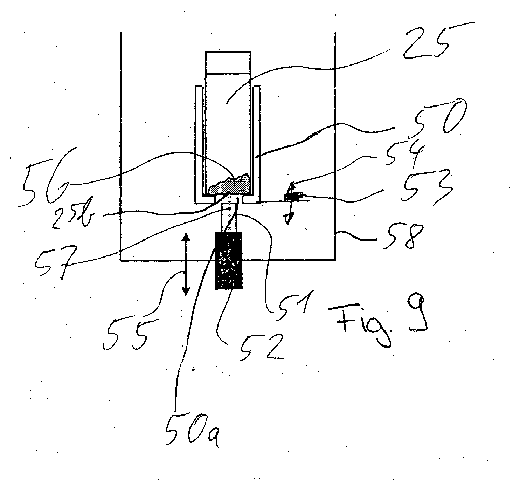

Once the robot has placed the vial 25 with ground sample and pierced hole into the powder feeder cup, it goes and picks a Micronic tube 51 from the Micronic racks mounted on the bed using suctions through the Micronic pick up. The cube 51 is placed onto the balance cradle which is located on the robot bed and is shown in Figure 9 by reference sign 58.

The balance 45 is connected with the pulling element 58 as shown in Figure 9 and the cub 50. The balance 45 is mounted to stepper motor 46 driven by screw axis allowing it to be raised and lowered as it is shown by reference sign 47.

Basically, the vial 25 is placed into the powder feeder cup 50 by the robot. The cup 50 has a hole 50a in the bottom as it is shown in Fig. 9.

This hole is specifically shaped to suit the positioning of the micronic tubes 51, which is placed in a cup 52.

The tubes are raised into position by the driven balance axis 46. An oscillating motor 53 which moves according to reference sign 54 as it is shown in Figure 9 with control means is rotated. The speed of the rotation is adjustable via a pot on the side of the robot. The offset weight causes the whole assembly to vibrate and the vial 25 with pierced hole in the bottom to vibrate. This creates a stream of powder 57 to fall from the vial 25 through the hole 25b and 50a into the Micronic tube 51 below.

The movement of the frame 58 which is performed by the lift 46, is shown by the reference sign 55.

The motor speed of rotation can be varied to change the level of vibration to suit the type of plant material and feed rates of the sample powder.

The balance axis 49 raises the balance and takes a zero reading which means the balance is "tared". The balance 45 then raises to its uppermost position which pulls the Micronic tube 51 into the bottom of the powder feeder cup 50. The motor is vibrated for a small period of time, which is typically 0,5 sec.. The powder falls through the pierced hole in the vial and into the Micronic tube 51. The balance is moved down to take the weight reading. This gives the amount of the material fed in 0,5 s. The computer program calculates the feed rate and calculates the time needed to feed the correct weight. The feed is then re-performed for this period and a further weight reading is made. The process continues until the correct weight is achieved or an overfeed occurs. The balance 45 moves back down to its down position and the Micronic tube 51 is picked and returned to the rack by the robot arm. The weight value is stored in the robot output file on the PC and the screen is updated to indicate to the operators the current status of the run.

The pierced hole has a diameter of around 1,5mm and the internal diameter of the Micronic tube is 6,8mm.

### List of reference signs

- 1: system housing
- 4: another part
- 8, 9, 10, 11: means
- 6, 25, 51: first vessel
- 23: recess / fixing element
- 24: spring element
- 25b: first openening
- 26a: first oscillating motor
- 27,28: z-direction
- 29: balls
- 31: stamp
- 32a: spring element
- 32b: needle
- 32c: the first recess
- 34: pivotable arm
- 37: fixed block element
- 40: holding element
- 45: balance device
- 50a: second opening
- 51: second vessel
- 52: cup
- 56,57: powder
- 58: pulling transport element

## Claims

1. System for producing quantified defined portions of powder (57) from at least one biological material wherein all following working steps were conducted at cryotemperature by automatic performing,
comprising
- means (8) for grinding the biological material deposited in at least one first vessel (6, 25) to the powder (56, 57);
- means (9) for loosening the powder (56) resulting from grinding the biological material in the first vessel (6, 25);
- means (10) for positioning at least one first opening (25b) in the first vessel (25), and
- means (11) for transferring the quantified defined portions of powder (56) in a plurality of second vessels (51) by using the first opening (25b) as a transfer way.

2. System according to claim 1,
**characterized in that**
the means (8) for grinding the biological material comprises an oscillating apparatus with a fixing element (23) for fixing the first vessel (25) and a first oscillating motor (26a), which oscillates the first vessel in at least one direction, preferably in z-direction (27, 28), with a selectable oscillating frequency and a selectable amplitude.

3. System according to claim 2,
**characterized In that**
the fixing element comprises a recess (23) for inserting the first vessel (25), wherein a spring element (24) for bearing the first vessel (25) springable is arranged on a bottom of the recess (23).

4. System according to any of the preceding claims,
**characterized in that**
each first vessel (25) contains In addition a plurality of balls (29) for performing the grinding process during oscillation.

5. System according to any of the preceding claims,
**characterized in that**
the means (9) for loosening the powder comprises a pivotable arm (34) which has at one end a holding element (40) for holding the first vessel (25), wherein the holding element (40) containing the first vessel (25) is pivotable movable against a fixed block element (37) in order to loosening the powder (56) in the first vessel (25) by shaking.

6. System according to any of the preceding claims,
**characterized in that**
the means (10) for positioning at least one opening (25b) in the first vessel (25) comprises at least one needle (32b), which is arranged on a bottom of a further recess (32a) having inserted the first vessel (25), wherein a stamp (31) for pressing the first vessel (25) in the first recess (32c) against a springforce of a further spring element (32a) is arranged.

7. System according to any of the preceding claims,
**characterized In that**
the means (11) for transferring the quantified defined portions of powder in a plurality of second vessels (51) comprises a pulling transport element (58) for transporting one of the second vessels (51) to the opening (25b) of the first vessel (25) by pulling it up to the lower side of the first vessel (25), wherein the first vessel (25) is positioned in a powder feeder cup (50) with a second opening (50a) at the bottom.

8. System according to claim 7,
**characterized in that**
the powder feeder cup (50) is connected with a second oscillating motor (53) for oscillating the powder feeder cup (50) containing the first vessel (25) in order to transfer the powder (56, 57) through the first opening (25b) and the second opening (50a) in the second vessel (51).

9. System according to claims 7 or 8,
**characterized in that**
the second vessel (51) is conntected by means of the pulling transport element (58) with a balance device (45) which measures the weight of the second vessel (51) and the included powder (57) during the transfer step of the powder (57).

10. System according to any of the preceding claims,
**characterized in that**
the system contains a freezer (3).

11. System according to claim 10,
**characterized in that**
the motors and/or electronic elements of the means (8 - 11) are at least partially arranged in a part of a system housing (1) which Is Isolated from another part (4) of the system housing containing cryotemperatures.

12. System according to any of the preceding claims,
**characterized In that**
all means (8-11) are connected by a robot arm (2, 12 - 21), which transports the first vessels (25) and the second vessels (51) in x-, y- and/or z- directions between the means (8 - 11) among themselves and/or between the means (8 - 11) and a first and second storing place (5, 7) for storing the first and second vessels (6, 25, 51).

13. Method for producing a quantified defined portions of powder (57) from at least one biological material wherein all following working steps were conducted at cryotemperature by automatic performing,
- grinding the biological material deposited in at least one first vessel (6, 25) to the powder (56, 57);
- loosening the powder (56) resulting from grinding the biological material in the first vessel (6, 25);
- positioning at least one first opening (25b) in the first vessel (25), and
- transferring the quantified defined portions of the powder (56) in a plurality of second vessels (51) by using the first opening (25b) as a transfer way.

## Patentansprüche

1. System zur Herstellung quantitativ definierter Pulverportionen (57) aus mindestens einem biologischen Material, wobei alle folgenden Arbeitsschritte bei Kryotemperatur durch automatische Ausführung durchgeführt wurden,
umfassend
- Mittel (8) zum Mahlen des biologischen Materials , das in mindestens einem ersten Gefäß (6, 25) deponiert ist, zu Pulver (56, 57);
- Mittel (9) zum Lockern des Pulvers (56), das als Ergebnis aus dem Mahlen des biologischen Materials in dem ersten Gefäß (6, 25) hervorgeht;
- Mittel (10) zum Positionieren mindestens einer ersten Öffnung (25b) in dem ersten Gefäß (25) und
- Mittel (11) zum Übertragen der quantitativ definierten Portionen des Pulvers (56) in eine Vielzahl von zweiten Gefäßen (51) durch Verwendung der ersten Öffnung (25b) als einen Übertragungsgang.

2. System nach Anspruch 1,
**dadurch gekennzeichnet, dass**
die Mittel (8) zum Mahlen des biologischen Materials ein oszillierendes Gerät mit einem Befestigungselement (23) zur Befestigung des ersten Gefäßes (25) und einen ersten Oszillationsmotor (26a), der das erste Gefäß in zumindest einer Richtung oszilliert, bevorzugt in z-Richtung (27, 28) mit einer wählbaren Oszillationsfrequenz und einer wählbaren Amplitude, umfasst.

3. System nach Anspruch 2,
**dadurch gekennzeichnet, dass**
das Befestigungselement eine Aussparung (23) zur Einfügung des ersten Gefäßes (25) umfasst, wobei ein Federelement (24) auf einem Boden der Aussparung (23) zur federnden Lagerung des ersten Gefäßes angeordnet ist.

4. System nach einem der vorhergehenden Ansprüche,
**dadurch gekennzeichnet, dass**
jedes erste Gefäß (25) zusätzlich eine Vielzahl von Kugeln (29) zur Durchführung des Mahlprozesses während der Oszillation enthält.

5. System nach einem der vorhergehenden Ansprüche,
**dadurch gekennzeichnet, dass**
die Mittel (9) zur Lockerung des Pulvers einen drehbaren Arm (34) umfassen, der an einem Ende ein Halteelement (40) zum Halten des ersten Gefäßes (25) aufweist, wobei das Halteelement (40), das das erste Gefäß (25) enthält, schwenkbar beweglich gegen ein befestigtes Blockelement (37) ist, um das Pulver (56) in dem ersten Gefäß (25) durch Schütteln zu lockern.

6. System nach einem der vorhergehenden Ansprüche,
**dadurch gekennzeichnet, dass**
die Mittel (10) zur Positionierung zumindest einer Öffnung (25b) in dem ersten Gefäß (25) zumindest eine Nadel (32b) umfassen, die auf einem Boden einer weiteren Aussparung (32a) angeordnet ist, welche das erste Gefäß (25) eingefügt aufweist, wobei ein Stampfer (31) zum Drücken des erste Gefäßes (25) in der ersten Aussparung (32c) gegen eine Federkraft eines weiteren Federelements (32a) angeordnet ist.

7. System nach einem der vorhergehenden Ansprüche,
**dadurch gekennzeichnet, dass**
die Mittel (11) zur Übertragung der quantitativ definierten Pulverportionen in eine Vielzahl von zweiten Gefäßen (51) ein Zugtransportelement (58) zum Transport eines der zweiten Gefäße (51) zu der Öffnung (25b) des ersten Gefäßes (25) durch Hochziehen zur tiefer liegenden Seite des ersten Gefäßes (25) umfassen, wobei das erste Gefäß (25) in einem Pulvereinspeisegefäß (50) mit einer zweiten Öffnung (50a) an dem Boden positioniert ist.

8. System nach Anspruch 7,
**dadurch gekennzeichnet, dass**
das Pulvereinspeisegefäß (50) mit einem zweiten Oszillationsmotor (53) zum Oszillieren des das erste Gefäß (25) enthaltenden Pulvereinspeisegefäßes (50) verbunden ist, um das Pulver (56, 57) durch die erste Öffnung (25b) und die zweite Öffnung (50a) in das zweite Gefäß (51) zu übertragen.

9. System nach Ansprüchen 7 oder 8,
**dadurch gekennzeichnet, dass**
das zweite Gefäß (51) mittels des Zugtransportelementes (58) mit einer Wiegevorrichtung (45) verbunden ist, die das Gewicht des zweiten Gefäßes (51) und des beinhalteten Pulvers (57) während des Übertragungsschrittes des Pulvers (57) misst.

10. System nach einem der vorhergehenden Ansprüche,
**dadurch gekennzeichnet, dass**
das System eine Gefrieranlage (3) enthält.

11. System nach Anspruch 10,
**dadurch gekennzeichnet, dass**
die Motoren und/oder elektronischen Elemente der Mittel (8-11) zumindest teilweise in einem Teil eines Systemgehäuses (1) angeordnet sind, das von einem anderen Kryotemperaturen enthaltenden Teil (4) des Systemgehäuses isoliert ist.

12. System nach einem der vorhergehenden Ansprüche,
**dadurch gekennzeichnet, dass**
alle Mittel (8-11) durch einen Roboterarm (2, 12-21) verbunden sind, der die ersten Gefäße (25) und die zweiten Gefäße (51) in x-, y-, und/oder z- Richtungen zwischen den Mitteln (8-11) untereinander und/oder zwischen den Mitteln (8-11) und einem ersten und zweiten Lagerplatz (5, 7) transportiert, um die ersten und zweiten Gefäße (6, 25, 51) zu lagern.

13. Verfahren zur Herstellung einer quantitativ definierten Pulverportion (57) aus zumindest einem biologischen Material, wobei alle folgenden Arbeitsschritte bei Kryotemperatur durch automatische Ausführung durchgeführt wurden,
- Mahlen des biologischen Material, das in zumindest einem ersten Gefäß (6, 25) deponiert ist, zu Pulver (56, 57);
- Lockern des Pulvers (56), das als Ergebnis aus dem Mahlen des biologischen Materials in dem ersten Gefäß (6, 25) hervorgeht;
- Positionierung zumindest einer ersten Öffnung (25b) in dem ersten Gefäß, und
- Übertragung der quantitativ definierten Portionen des Pulvers (56) in eine Vielzahl von zweiten Gefäßen (51) durch Verwendung der ersten Öffnung (25b) als Übertragungsgang.

## Revendications

1. Système destiné à produire des portions de poudre définies quantifiées (57) à partir d'au moins un matériau biologique, dans lequel toutes les étapes de travail suivantes ont été exécutées de manière automatique à une température cryogénique, comprenant :
- un moyen (8) pour pulvériser le matériau biologique déposé dans au moins un premier récipient (6, 25), en poudre (56, 57) ;
- un moyen (9) pour détacher la poudre (56) résultant de la pulvérisation du matériau biologique dans le premier récipient (6, 25) ;
- un moyen (10) pour positionner au moins une première ouverture (25b) dans le premier récipient (25) ; et
- un moyen (11) pour transférer les portions de poudre définies quantifiées (56) dans une pluralité de seconds récipients (51) en utilisant la première ouverture (25b) en tant que chemin de transfert.

2. Système selon la revendication 1, **caractérisé en ce que** :
le moyen (8) pour pulvériser le matériau biologique comprend un appareil oscillant avec un élément de fixation (23) pour fixer le premier récipient (25) et un premier moteur oscillant (26a), qui fait osciller le premier récipient dans au moins une direction, de préférence dans la direction z (27, 28), avec une fréquence d'oscillation pouvant être sélectionnée et une amplitude pouvant être sélectionnée.

3. Système selon la revendication 2, **caractérisé en ce que** :
l'élément de fixation comprend un renfoncement (23) pour insérer le premier récipient (25), dans lequel un élément de ressort (24) pour porter de manière élastique le premier récipient (25) est agencé sur un fond du renfoncement (23).

4. Système selon l'une quelconque des revendications précédentes, **caractérisé en ce que** :
chaque premier récipient (25) contient en outre une pluralité de billes (29) pour exécuter le processus de pulvérisation au cours de l'oscillation.

5. Système selon l'une quelconque des revendications précédentes, **caractérisé en ce que** :
le moyen (9) pour détacher la poudre comprend un bras pivotant (34) qui présente au niveau d'une extrémité un élément de maintien (40) pour maintenir le premier récipient (25), dans lequel l'élément de maintien (40) contenant le premier récipient (25) peut se déplacer de manière pivotante contre un élément de bloc fixe (37) afin de détacher la poudre (56) dans le premier récipient (25) grâce à des secousses.

6. Système selon l'une quelconque des revendications précédentes, **caractérisé en ce que** :
le moyen (10) pour positionner au moins une ouverture (25b) dans le premier récipient (25) comprend au moins une aiguille (32b), qui est agencée sur un fond d'un autre renfoncement (32a) dans lequel est inséré le premier récipient (25), dans lequel est agencé un pilon (31) pour presser le premier récipient (25) dans le premier renfoncement (32c) contre une force d'un ressort d'un autre élément de ressort (32a).

7. Système selon l'une quelconque des revendications précédentes, **caractérisé en ce que** :
le moyen (11) pour transférer les portions de poudre définies quantifiées dans une pluralité de seconds récipients (51) comprend un élément de transport à traction (58) pour transporter l'un des seconds récipients (51) vers l'ouverture (25b) du premier récipient (25) en le tirant jusqu'au côté inférieur du premier récipient (25), dans lequel le premier récipient (25) est positionné dans une coupelle de dispositif d'approvisionnement en poudre (50) avec une seconde ouverture (50a) au niveau du fond.

8. Système selon la revendication 7, **caractérisé en ce que** :
la coupelle de dispositif d'approvisionnement en poudre (50) est reliée à un second moteur oscillant (53) pour faire osciller la coupelle de dispositif d'approvisionnement en poudre (50) contenant le premier récipient (25) afin de transférer la poudre (56, 57) à travers la première ouverture (25b) et la seconde ouverture (50a) dans le second récipient (51).

9. Système selon la revendication 7 ou 8, **caractérisé en ce que** :
le second récipient (51) est relié au moyen de l'élément de transport à traction (58) à un dispositif de balance (45) qui mesure le poids du second récipient (51) et de la poudre incluse (57) au cours de l'étape de transfert de la poudre (57).

10. Système selon l'une quelconque des revendications précédentes, **caractérisé en ce que** :
le système contient un congélateur (3).

11. Système selon la revendication 10, **caractérisé en ce que** :
les moteurs et/ou les éléments électroniques des moyens (8-11) sont agencés au moins en partie dans une partie d'un logement du système (1) qui est isolée d'une autre partie (4) du logement du système contenant des températures cryogéniques.

12. Système selon l'une quelconque des revendications précédentes, **caractérisé en ce que** :
tous les moyens (8-11) sont reliés par un bras de robot (2, 12-21), qui transporte les premiers récipients (25) et les seconds récipients (51) dans les directions x, y et/ou z entre les moyens (8-11) entre eux-mêmes et/ou entre les moyens (8-11) et des premier et second endroits de stockage (5, 7) pour stocker les premiers et seconds récipients (6, 25, 51).

13. Procédé destiné à produire des portions de poudre définies quantifiées (57) à partir d'au moins un matériau biologique, dans lequel toutes les étapes de travail suivantes ont été exécutées de manière automatique à une température cryogénique :
- pulvériser le matériau biologique déposé dans au moins un premier récipient (6, 25), en poudre (56, 57) ;
- détacher la poudre (56) résultant de la pulvérisation du matériau biologique dans le premier récipient (6, 25) ;
- positionner au moins une première ouverture (25b) dans le premier récipient (25) ; et
- transférer les portions de poudre définies quantifiées (56) dans une pluralité de seconds récipients (51) en utilisant la première ouverture (25b) en tant que chemin de transfert.
